**Europäisches Patentamt**

**European Patent Office**

**Office européen des brevets**

(19)

(11) Veröffentlichungsnummer : **0 386 553 B1**

(12) ## EUROPÄISCHE PATENTSCHRIFT

(45) Veröffentlichungstag der Patentschrift :
**01.02.95 Patentblatt 95/05**

(51) Int. Cl.$^6$ : **H02H 7/08,** H02P 7/62

(21) Anmeldenummer : **90103589.9**

(22) Anmeldetag : **23.02.90**

(54) **Schutzeinrichtung für einen Synchronmotor.**

(30) Priorität : **09.03.89 DE 3907653**

(43) Veröffentlichungstag der Anmeldung :
**12.09.90 Patentblatt 90/37**

(45) Bekanntmachung des Hinweises auf die
Patenterteilung :
**01.02.95 Patentblatt 95/05**

(84) Benannte Vertragsstaaten :
**AT BE CH DE ES FR GB IT LI NL SE**

(56) Entgegenhaltungen :
**DE-A- 2 451 965**
**DE-B- 1 117 208**
**SIEMENS-ZEITSCHRIFT, Band 46, Heft 12, De-**
**zember 1972, Seiten 912-915; E. BORN et al.:**
**"Elektronischer Untererregungsschutz"**

(73) Patentinhaber : **SIEMENS**
**AKTIENGESELLSCHAFT**
**Wittelsbacherplatz 2**
**D-80333 München (DE)**

(72) Erfinder : **Fischer, Armin, Dipl.-Ing.**
**Ringstrasse 32a**
**D-8525 Uttenreuth (DE)**

EP 0 386 553 B1

## Beschreibung

Die Erfindung bezieht sich auf eine Verwendung einer Schutzeinrichtung, die einen durch eine Netzstörung verursachten Asynchronzustand erfaßt, zum Schutz eines Synchronmotors.

Aus der DE-OS 28 23 201 ist eine Schutzeinrichtung zur Überwachung der Grenzen der Stabilität einer Synchronmaschine bekannt, bei der unter Verwendung eines Meßumformers, der aus den Größen Strom, Spannung und Leistungsfaktor, die an den Maschinenklemmen gemessen werden, jeweils zwei die Stabilität bestimmende Größen erzeugt und in einem Komparator verglichen werden, der geeignete Schutzmaßnahmen auslöst, wenn die beiden Größen gleich werden. Diese Schutzeinrichtung ist meßtechnisch aufwendig, wobei der Schaltungsaufwand hoch ist.

Aus der Siemens-Zeitschrift Heft 12, Band 46, Dez. 1972, Seiten 912 bis 915, ist ein Untererregungsschutz bekannt, der speziell bei Synchrongeneratoren Anwendung findet. Dort wird der Quotient aus Nennerregerstrom und Nennspannung gebildet, wobei beim Vergleich mit einer vorgebbaren Kennlinie ein Kriterium für eine Untereregung gegeben ist. Dieser Schutz dient ausschließlich für die Signalisierung einer Untererregung im generatorischen Betrieb.

Bei einer Netzstörung fällt die Netzspannung während einer kurzen Zeit stark ab bzw. sie bricht aufgrund eines Kurzschlusses zusammen. Dieser Spannungseinbruch kann dazu führen, daß nach Spannungswiederkehr das synchronisierende Moment nicht ausreicht, den Motor wieder in Synchronismus zu ziehen, so daß der Motor außer Tritt fällt.

Aufgabe der vorliegenden Erfindung ist es, eine Schutzeinrichtung zu schaffen, die bei einem Synchronmotor einen Asynchronzustand erkennt, welcher durch Netzspannungsausfall bzw. -absenkung hervorgerufen wurde.

Diese Aufgabe wird erfindungsgemäß mit den Merkmalen der Ansprüche 1 oder 2 gelöst.

Durch die Schutzeinrichtung wird der Außertrittfall eines Synchronmotors infolge einer Netzstörung rechtzeitig und zuverlässig erfaßt.

Um diesen meist unzulässigen Zustand des Synchronmotors rechtzeitig zu erkennen, wird durch die Schutzeinrichtung erfindungsgemäß der Ständerstrom und die Ständerspannung des Synchronmotors erfaßt und aus der Blindkomponente des Ständerstromes und aus der Ständerspannung ein Blindleitwert gebildet. Der ermittelte Blindleitwert wird mit den Werten einer Schutzkennlinie verglichen. Die Schutzkennlinie ist durch einen einstellbaren Ansprechwert festgelegt. Überschreitet der ermittelte Blindleitwert diesen zulässigen Ansprechwert, d.h. erreicht der Synchronmotor durch die schlupfbedingte Verkleinerung der Eingangsreaktanzen einen Betriebspunkt linksseitig der Schutzkennlinie, dann wird die Schutzeinrichtung aktiviert und der Synchronmotor vom Netz getrennt. Die erfindungsgemäß verwendete Schutzeinrichtung weist darüberhinaus eine zeitverzögerte Rückfallzeit und/oder ein kleines Rückfallverhältnis auf.

Falls sich die am Synchronmotor anliegende Netzspannung nach der Netzstörung nur wenig von der vor der Netzstörung anliegenden Netzspannung unterscheidet, genügt erfindungsgemäß die Erfassung der Blindkomponente des Ständerstromes, da diese in diesem Fall dem Blindleitwert proportional ist. Anstelle der Blindkomponente des Ständerstromes kann in diesem Fall auch die Blindleistung erfaßt werden. In beiden Fällen wird wiederum bei Überschreiten einer durch einen einstellbaren Ansprechwert festgelegten Schutzkennlinie die Schutzeinrichtung aktiviert.

Ist die Schutzkennlinie eine Gerade, deren Neigungswinkel gemäß einer besonderen Ausführungsform der Erfindung einstellbar ist, dann erhält man bei einem Neigungswinkel von 90° eine Parallele zur Ordinate des Leitwertdiagramms.

Es wird empfohlen, den einstellbaren Ansprechwert der Schutzkennlinie auf etwa den Wert der reziproken Synchronlängsreaktanz zu legen. Wird dieser Wert für eine bestimmte Zeit überschritten, dann ist dies ein sicheres Kriterium für einen Außertrittfall-Zustand des Motors. Es ist daher vorteilhaft, der Schutzeinrichtung eine Zeitstufe nachzuschalten, die eine Auslösung um etwa eine Sekunde verzögert.

Da der Einstellwert der Schutzeinrichtung variabel ist, kann sie für Motoren unterschiedlicher Synchronlängsreaktanzen eingesetzt werden. Außerdem ist damit auch eine von der reziproken Synchronlängsreaktanz abweichende Einstellung möglich.

Mit der erfindungsgemäßen Verwendung der Schutzeinrichtung kann in vorteilhafter Weise neben dem Außertrittfall infolge einer Netzstörung auch eine fehlerhafte Untererregung bzw. ein Erregerausfall des Synchronmotors erfaßt werden.

Die Erfindung wird im folgenden anhand in der Zeichnung schematisch dargestellter Diagramme näher erläutert. Darin zeigt:

FIG 1      ein Leitwertdiagramm, in dem die Schutzkennlinie einer ersten Ausführungsform der erfindungsgemäßen Verwendung der Schutzeinrichtung eingezeichnet ist,

FIG 2      ein Leitwertdiagramm, in dem die Schutzkennlinie einer zweiten Ausführungsform der erfindungsgemäßen Verwendung der Schutzeinrichtung eingezeichnet ist,

FIG 3 ein Leitwertdiagramm, in dem der Außertrittfall infolge eines Netzkurzschlusses dargestellt ist.

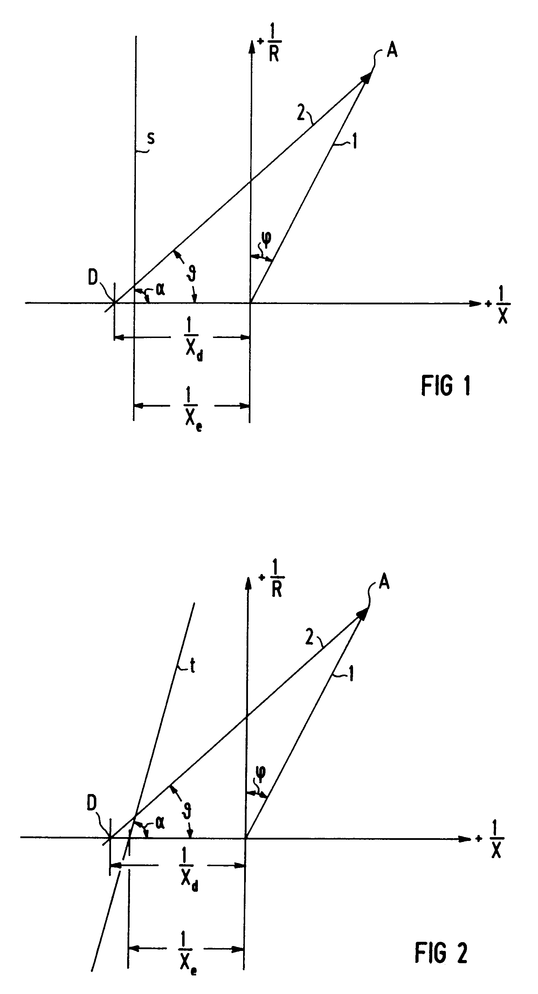

In den FIG 1-3 ist jeweils ein Leitwertdiagramm eines Synchronmotors im kartesischen Koordinatensystem dargestellt. Die Abszisse wird hierbei von dem Blindleitwert $\frac{1}{X}$ und die Ordinate von dem Wirkleitwert $\frac{1}{R}$ gebildet.

In den Diagrammen gemäß FIG 1 und 2 ist mit 1 der Leitwert $\frac{I}{U}$, der sich aus Blind- und Wirkanteil zusammensetzt, bezeichnet, wobei I der Ständerstrom und U die Ständerspannung ist. Mit 2 ist der Verlauf des Maschinenwertes $\frac{E}{U \cdot X_d}$ bezeichnet, wobei E die Polradspannung und $X_d$ die Synchronlängsreaktanz ist. Der Vektor 1 hat seinen Fußpunkt im Koordinatenursprung und schließt mit der Ordinate $\frac{1}{R}$ den Phasenwinkel $\ell$ ein. Der Vektor 2 hat seinen Ursprung im Punkt D, der bei einem idealisierten Vollpol-Synchronmotor im Abstand $\frac{1}{X_d}$ auf der Abszisse $\frac{1}{X}$ liegt und mit dieser den Polradwinkel $\vartheta$ einschließt.

Die beiden Vektoren 1 und 2 bilden zusammen mit der reziproken Längsreaktanz $\frac{1}{X_d}$ für jeden auftretenden Leitwert $(\frac{1}{R};\frac{1}{X})$ ein geschlossenes Dreieck, d.h. der Vektor 2 ist die geometrische Summe aus der vektoriellen Addition des Vektors 1 und der reziproken Synchronlängsreaktanz $\frac{1}{X_d}$.

Überschreitet bei steigendem Polradwinkel $\vartheta$ der Leitwert 1 mit seinem Blindleitwert $\frac{1}{X}$ einen vorgegebenen Ansprechwert, d.h. erreicht der Synchronmotor einen Betriebspunkt linksseitig einer Schutzkennlinie s (FIG 1) bzw. t (FIG 2), dann löst die Schutzeinrichtung aus, wonach der Synchronmotor vom Netz getrennt wird. Die Schutzkennlinie s bzw. t ist durch einen einstellbaren Ansprechwert $(\frac{1}{X})_e$ festgelegt, so daß damit die Schutzkennlinie auf verschiedene Werte von $\frac{1}{X_d}$ oder auch von $\frac{1}{X_d}$ abweichende Werte einstellbar ist. In den FIG 1 und 2 ist z.B. der einstellbare Ansprechwert $(\frac{1}{X})_e$ betragsmäßig kleiner als die reziproke Synchronlängsreaktanz $\frac{1}{X_d}$. Die Schutzkennlinie s in FIG 1 verläuft parallel zur Ordinate $\frac{1}{R}$, der Neigungswinkel $\alpha$ gegen die Abszisse $\frac{1}{X}$ beträgt also 90°. Die Schutzkennlinie t in FIG 2 verläuft dagegen in einem Neigungswinkel $\alpha$ < 90°, der einstellbare Ansprechwert $(\frac{1}{X})_e$ wird also proportional zum Wirkleitwert $\frac{1}{R}$ variiert.

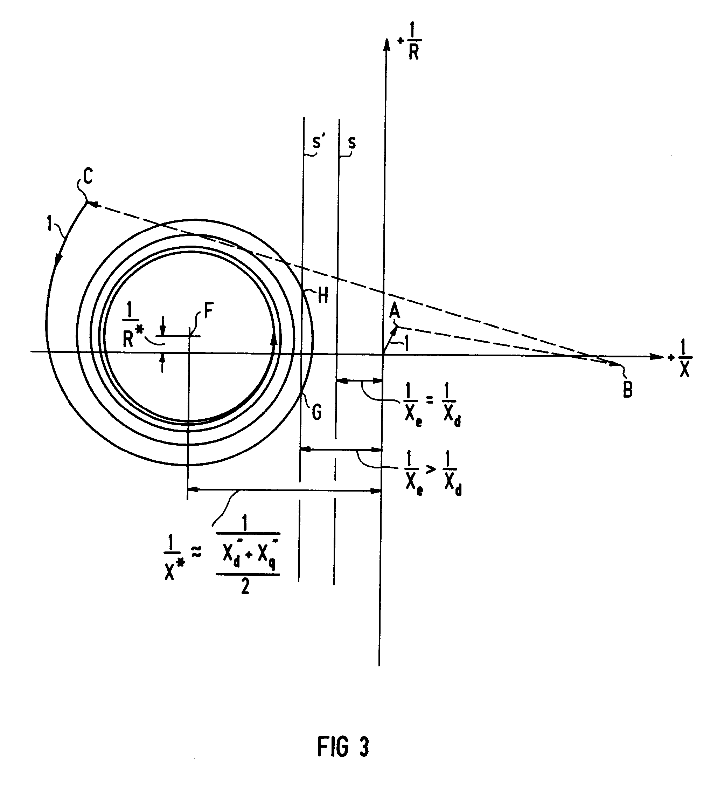

In FIG 3 ist der Verlauf des Leitwertes 1 eines Synchronmotors nach einem länger andauernden Netzkurzschluß dargestellt. Der Vektor 1 zeigt bei ungestörter Spannungsversorgung auf einen Punkt A. Bei Auftreten eines Kurzschlusses springt der Vektor 1 auf einen Punkt B, der knapp unterhalb der Aszisse $\frac{1}{X}$ und rechts von der Ordinate $\frac{1}{R}$ liegt. Nach Kurzschlußabschaltung und damit verbundener Spannungswiederkehr springt der Leitwert 1 vom Punkt B auf den Punkt C, der oberhalb der Abszisse $\frac{1}{X}$ und linksseitig der Schutzkennlinie s liegt. Der anschließende Verlauf des Leitwertes 1 zeigt aufgrund des Außertrittfalls von dem Punkt C aus eine stetige, zunächst spiralförmige Kreisbewegung um einen Punkt F $(\frac{1}{R*};\frac{1}{X*})$. Der Wert $\frac{1}{R*}$ wird im wesentlichen bestimmt durch Motorlast und Motorerregung, der Wert $\frac{1}{X*}$ wird im wesentlichen bestimmt durch den Mittelwert von subtransienter Längsreaktanz $X''_d$ und subtransienter Querreaktanz $X''_q$, d.h. $X* \approx \frac{X''_d + X''_q}{2}$. Die Hüllkurven verkleinern sich mit zunehmendem Schlupf.

Bei der Einstellung der Schutzeinrichtung entsprechend der dargestellten Schutzkennlinie s bleibt die Schutzeinrichtung während des Außertritt-Zustandes immer angeregt. Bei einer Einstellung der Schutzeinrichtung entsprechend der dargestellten Schutzkennlinie s' würde die Schutzeinrichtung im Punkt G abfallen und im Punkt H wieder auslösen. Ein kurzzeitiges Abfallen im Zeitbereich $t_G$ bis $t_H$ kann durch das oben beschriebene kleine Rückfallverhältnis oder eine entsprechend gewählte Rückfallzeit vermieden werden.

**Patentansprüche**

1. Verwendung einer Schutzeinrichtung, die einen durch eine Netzstörung verursachten Asynchronzustand erfaßt, zum Schutz eines Synchronmotors,

   - bei der aus Ständerstrom (I) und Ständerspannung (U) des Synchronmotors ein Blindleitwert $(\frac{1}{X})$ ermittelt wird, der bei Überschreiten einer durch einen einstellbaren Ansprechwert $((\frac{1}{X})_e)$ festgelegten Schutzkennlinie (s;t) die Schutzeinrichtung aktiviert
   - und die eine zeitverzögerte Rückfallzeit und/oder ein kleines Rückfallverhältnis (Abfallwert/Ansprechwert) aufweist.

2. Verwendung einer Schutzeinrichtung, die einen durch eine Netzstörung verursachten Asynchronzustand erfaßt, zum Schutz eines an annähernd konstanter Netzspannung liegenden Synchronmotors,

   - bei der die Blindkomponente ($I_B$) des Ständerstromes des Synchronmotors (I) oder die Blindkomponente ($P_B$) der Leistung (P) ermittelt wird, die bei Überschreiten einer durch einen einstellbaren Ansprechwert $((\frac{U}{X})_e; (\frac{U^2}{X})_e)$ festgelegten Schutzkennlinie die Schutzeinrichtung aktiviert
   - und die eine zeitverzögerte Rückfallzeit und/oder ein kleines Rückfallverhältnis (Abfallwert/Ansprechwert) aufweist.

3. Verwendung einer Schutzeinrichtung nach Anspruch 1 oder 2, bei der der Ansprechwert $((\frac{1}{X})_e; (\frac{U}{X})_e); (\frac{U^2}{X})_e)$ auf die reziproke Synchronlängsreaktanz $(\frac{1}{X_d})$ oder einen dazu proportionalen Wert $(\frac{U}{X_d}; \frac{U^2}{X_d})$ eingestellt ist.

4. Verwendung einer Schutzeinrichtung nach Anspruch 1 , 2 oder 3, bei der die Schutzkennlinie (s;t) eine Gerade ist.

5. Verwendung einer Schutzeinrichtung nach einem der Ansprüche 1-4, bei der die Schutzkennlinie (s;t) in ihrem Neigungswinkel ($\alpha$) einstellbar ist.

6. Verwendung einer Schutzeinrichtung nach einem der Ansprüche 1-5, bei der ein zeitverzögerte Aktivierung der Auslösung vorgesehen ist.

**Claims**

1. Use of a protective device which detects an asynchronous state caused by a mains-borne interference, for the protection of a synchronous motor

   - in which a susceptance (1/X) is ascertained from stator current (I) and stator voltage (U) of the synchronous motor, said susceptance activating the protective device in the event of a protection characteristic (s;t) established by an adjustable response value $((1/X)_e)$ being crossed,
   - and which exhibits a time-delayed fall-back time and/or a small fall-backratio (drop-value/response-value).

2. Use of a protective device which detects an asynchronous state caused by a mains-borne interference, for the protection of a synchronous motor connected to an approximately constant mains voltage

   - in which the reactive component ($I_B$) of the stator current (I) of the synchronous motor or the reactive component ($P_B$) of the power (P) is ascertained which activates the protective device in the event of a protection characteristic established by an adjustable response value $((U/X)_e; (U^2/X)_e)$ being crossed,
   - and which exhibits a time-delayed fall-back time and/or a small fall-back ratio (drop-value/response-value).

EP 0 386 553 B1

3. Use of a protective device according to Claim 1 or 2, in which the response value $((1/X)_e; (U/X)_e; (U^2/X)_e)$ is adjusted to the reciprocal direct-axis synchronous reactance $(1/X_d)$ or a value $(U/X_d; U^2/X_d)$ which is proportional thereto.

4. Use of a protective device according to Claim 1, 2 or 3, in which the protection characteristic (s;t) is a straight line.

5. Use of a protective device according to one of Claims 1-4, in which the angle of inclination ($\alpha$) of the protection characteristic (s;t) is adjustable.

6. Use of a protective device according to one of Claims 1-5, in which a time-delayed activation of the triggering is provided.


## Revendications

1. Utilisation d'un dispositif de protection, qui détecte un état asynchrone provoqué par une perturbation dans le réseau, pour la protection d'un moteur synchrone,
   - dans lequel une susceptance $(\frac{1}{X})$, qui met en action le dispositif de protection lors du dépassement d'une courbe caractéristique de protection (s,t) déterminée par une valeur de seuil réglable $((\frac{1}{X})_e)$, est déterminée à partir du courant (I) et de la tension (U) du stator du moteur synchrone, et
   - qui a un instant de retour retardé et/ou un petit taux de retour (valeur de repos/valeur de seuil).

2. Utilisation d'un dispositif de protection, qui détecte un état asynchone provoqué par une perturbation du réseau, pour la protection d'un moteur synchrone alimenté par une tension de réseau approximativement constante, dans lequel la composante réactive $(I_B)$ du courant statorique (I) du moteur synchrone ou la composante réactive $(P_B)$ de la puissance (P), qui met en action le dispositif de protection lors du dépassement d'une courbe caractéristique de protection déterminée par une valeur de seuil réglable $((\frac{U}{X})_e; (\frac{U^2}{X})_e)$, est déterminée, et
   - qui a un instant de retour retardé et/ou un petit taux de retour (valeur de repos/valeur de seuil).

3. Utilisation d'un dispositif de protection suivant la revendication 1 ou 2, dans lequel la valeur de seuil $((\frac{1}{X})_e; (\frac{U}{X})_e; (\frac{U^2}{X})_e)$ est réglée sur l'inverse de la réactance longitudinale synchrone $(\frac{1}{X_d})$ ou sur une valeur $(\frac{U}{X_d}; \frac{U^2}{X_d})$ proportionnelle à cette réactance.

4. Utilisation d'un dispositif de protection suivant l'une des revendications 1, 2 ou 3, dans lequel la courbe caractéristique de protection (s; t) est une droite.

5. Dispositif de protection suivant l'une des revendications 1-4, dans lequel l'angle d'inclinaison (a) de la courbe caractéristique de protection (s; t) est réglable.

6. Utilisation d'un dispositif de protection suivant l'une des revendications 1 à 5, dans lequel une mise en action retardée du déclenchement est prévue.

5

FIG 1

FIG 2

FIG 3